**Europäisches Patentamt**

**European Patent Office**

**Office européen des brevets**

(11) Veröffentlichungsnummer: **0 491 963 A1**

## (12) EUROPÄISCHE PATENTANMELDUNG
### veröffentlicht nach Art. 158 Abs. 3 EPÜ

(21) Anmeldenummer: **91912822.3**

(22) Anmeldetag: **28.06.91**

(86) Internationale Anmeldenummer:
**PCT/SU91/00131**

(87) Internationale Veröffentlichungsnummer:
**WO 92/00551 (09.01.92 92/02)**

(51) Int. Cl.$^5$: **G03B 21/00**

(30) Priorität: **29.06.90 SU 4842730**

(43) Veröffentlichungstag der Anmeldung:
**01.07.92 Patentblatt 92/27**

(84) Benannte Vertragsstaaten:
**AT BE CH DE DK ES FR GB IT LI NL SE**

(71) Anmelder: **ARSENICH, Svyatoslav Ivanovich**
**ul. Glukhova, 9-159**
**Sevastopol, 335053(SU)**

(72) Erfinder: **ARSENICH, Svyatoslav Ivanovich**
**ul. Glukhova, 9-159**
**Sevastopol, 335053(SU)**

(74) Vertreter: **Röhl, Wolf Horst, Dipl.-Phys., Dr. et al**
**Dipl.-Ing. K. Sparing Dipl.-Phys. Dr. W.H. Röhl**
**Rethelstrasse 123**
**W-4000 Düsseldorf 1(DE)**

(54) **PROJEKTOR.**

(57) Ein Projektionsapparat, bestehend aus einer Faseroptik-Platte (1), deren Eingangsenden (2) der Lichtleiter (3) mit der Ebene (a - a ) des Originalbildes zusammenfallen, und einem Projektionsobjektiv (8), in dessen Blickfeld sich die Ausgangsenden (9) der Lichtleiter (3) der Faseroptik-Platte (1) befinden. Auf der Verbreitungsstrecke der Lichtstrahlen in jedem der Lichtleiter (3) der Faseroptik-Platte (1) ist ein optisches System (10) zur Konzentrierung der Lichtstrahlen zu einem Lichtbuendel und zu seiner Lenkung in die Ausblickoeffnung (11) des Projektionsobjektivs (8) gebildet. Das besagte System (10) besteht aus einem Fokon (12), einer positiven Linse (13) und einem Brechungsprisma (14), die sich in Richtung des Strahlenverlaufs in dem Lichtleiter (3) nacheinander befinden, waehrend die optische Achse ($O_3$ - $O_3$) des Fokons (12) und die optische Achse ($O_4$ - $O_4$) der positiven Linse mit der optischen Achse ($O_1$ - $O_1$) des Lichtleiters (3) zusammenfallen.

FIG. 2

FIG.1

## Technikbereich

Die vorliegende Erfindung bezieht sich auf den Bereich Optikgeraetebau, unter anderem auf Vorrichtungen zur Lichtbild-Projektionswiedergabe von visuellen Informationen, und zwar auf einen Projektionsapparat.

## Bekannter Technikstand

Gegenwaertig werden bekannte Projektionsapparate vervollkommnet und grundlegend neuartige Konstruktionen von kleinformatigen Projektionsapparaten entwickelt, die es ermoeglichen, Lichtbilder auf Bildschirmen mittleren und grossen Formats hochqualitativ wiederzugeben. Grundanforderungen an solche Projectionsapparate sind hohe Bildschaerfe, Kontrast und Helligkeit des auf dem Bildschirm wiederzugebenden Lichtbildes, das komfortabel genug fuer die visuelle Aufnahme in gegebenen Bedingungen der Umgebungsraumbeleuchtung sein muss. Darueber hinaus haben solche Projektionsapparate eine Reihe von Betriebserfordernissen zu befriedigen, und zwar: die Leistungsaufnahme der Lichtquelle des Projektionsapparates soll niedrig liegen, der Projektionsapparat soll in einer normalen elektrischen und Temperaturskala betrieben werden koennen, der Pegel der Roentgenstrahlung darf nicht die hoechstzulaessigen Normgrenzen ueberschreiten (gemeint sind Projektionsapparate, in denen eine Bildroehre als Bildquelle verwendet ist) usw.

Die groesste Verbreitung konnten Fernseh-Projektionssysteme finden. d.h. Projektionsapparate, in denen eine Bildroehre als Quelle eines optischen Bildes dient. Solch ein Fernsehsystem (s. W.S.Babenko. Optik der Fernsehanlagen, 1982, Verlag Radio i swjas, Moskau, S.232-234) enthaelt eine Bildroehre und ein Linsenprojektionsobjektiv, in dessen Blickfeld ein Bildschirm montiert ist. In solch einem System wird die auf dem Bildschirm der Bildroehre leuchtende Darstellung durch das Projektionsobjektiv auf den Zuschauerbildschirm projiziert.

Die Lichteffektivitaet solch einer Projektionsanlage, die die Bildhelligkeit, den Kontrast und die Farbsaettigung der Projektion vorbestimmt, ist aber recht niedrig. Vor allem erklaert sich das dadurch, dass bei einer Qualitaetsprojektion aus einem Originalbild, dessen Flaeche mit der der Ausblickoeffnung des Projektionsobjektivs vergleichbar ist, lediglich bis 9% des vom Originalbild (d.h. vom Bildschirm der Bildroehre) diffus ausgestrahlten Lichtstroms durch das Wiedergabelinsenobjektiv auf den Zuschauerbildschirm geführt wird, was mit der niedrigen geometrischen Lichtstaerke des Objektivs in den bekannten Projektionsapparaten verbunden ist. Eine Erhoehung der Lichteffektivitaet des Projektionssystems durch Vergroesserung der Originalbildflaeche ohne Vergroesserung der Flaeche der Ausblickoeffnung des Projektionsobjektivs ist uneffektiv, weil sich die sichtbare Differenz nach Helligkeit in der Mitte und auf den Raendern des Projektionsfeldes auf der Zuschauerbildwand erhoeht und sichtbare geometrische Aberrationen entstehen. Eine erhoehte Lichteffektivitaet des Projektionssystems auf dem Wege einer Vergroesserung der Originalbildflaeche ist ebenfalls unzweckmaessig, denn in diesem Falle wird es notwendig, den Abstand zwischen Objektiv und Originalbild zu vergroessern, um die geometrischen Aberrationen auszuschliessen, was seinerseits zu einer Senkung des nuetzlichen Lichtstroms proportional dem Quadrat des Abstandes zwischen Objektiv und Originalbild fuehrt. Ausserdem ist die Herstellung von Projektionsobjektiven mit groesserer Ausblickoeffnungsflaeche technisch kompliziert. In den Fernsehprojektionssystemen wird eine erhoehte Projektionshelligkeit in der Regel dank einem Bildroehrenbetrieb in einer forcierten elektrischen und einer harten Temperaturbetriebsweise erzielt. Das ergibt jedoch eine schroffe Nutzungsdauerverkuerzung der Bildroehre, eine erhoehte Roentgenstrahlung sowie ein vermindertes Aufloesungsvermoegen der Bildroehre.

Bekannt sind ferner Spiegellinsen-Fernsehprojektjonssysteme, die sogenannten Schmidt-Fernsehsysteme (s. W.S.Babenko, ebenda, S.234-237). Sie enthalten eine Bildroehre, einen Sphaeroid-Hohlspiegel und eine korrigierende Linse, die eine gemeinsame optische Achse aufweisen. Der Spiegel und die Linse bilden ein Spiegel-Linsen-Projektionsobjektiv. Der Sphaeroidspiegel ist mit seiner Hohloberflaeche vor dem Bildschirm der Bildroehre montiert, waehrend sich die korrigierende Linse hinter der Bildroehre befindet. Ein diffuser Lichtstrom von dem Bildschirm der Bildroehre reflektiert sich vom Spiegel und wird durch die korrigierende Linse auf der Zuschauerbildwand fokussiert.

Solche Spiegel-Linsen-Fernsehprojektionssysteme weisen einen Koeffizient der optischen Wiedergabe bis 30%, also mehr als das obenbeschriebene Projektionssystem mit Linsenobjektiv, auf. Das erklaert sich damit, dass ein Spiegellinsenobjektiv einen groesseren Blickwinkel und ein hohes Aufloesungsvermoegen besitzt.

Der Durchmesser des sphaerischen Spiegels wird jedoch ausgehend von einer vollstaendigeren Ausnutzung des von der Bildroehre ausgestrahlten Lichtstroms ausgewaehlt. In der Praxis betraegt dieser Durchmesser das 3 bis 4-fache des Durchmessers des Bildroehrenschirms. Der Kruemmungsradius des Spiegels und der Durchmesser der korrigierenden Linse richtet sich nach der Bedingung der Erzielung einer maximalen Lichtstaerke und der zulaessigen Vignettierung. Dabei wird der Kruemmungsradius des Spiegels in den Grenzen von 0,8 bis 1,0 Spiegeldurchmesser, waehrend der Durchmesser der korrigierenden Linse im Bereich von 0,65 bis 0,75 Spiegeldurchmesser festgelegt ist. Die genannten Abmessungsverhaeltnisse zeugen davon, dass bei kleinen Bildroehreschirmabmessungen die Abmessungen von Spiegel und korrigierender Linse gross sind. Durch Verwendung von Bildroehren mit kleinen Bildschirmabmessungen wird die Lichteffektivitaet des Projektionssystems bei mittleren und grossen Zuschauerbildwaenden beeintraechtigt; anders gesagt, ist die Erzielung von hoher Helligkeit, Kontrast und Farbsaettigung der Projektion auf mittleren und grossen Bildschirmen bei kleinen Abmessungen des Bildroehreschirmes unerreichbar. Eine Vergroesserung der Abmessungen des Bildroehreschirmes fuehrt aber zu einer bedeutenden Vergroesserung der Abmessungen des sphaerischen Spiegels und der korrigierenden Linse, d.h. zu vergroesserten Abmessungen des Projektionssystems, wodurch seine Herstellung und Justierung komplizierter werden.

Bekannt ist ferner ein Projektionsapparat (USA-Patentschrift Nr.3506782), der eine Faseroptik-Platte aufweist, deren Eingangsenden der Lichtleiter mit der Ebene des Originalbildes zusammenfallen, ferner ein Projektionsobjektiv, in dessen Blickfeld sich die Ausgangsenden der Lichtleiter der Faseroptik-Platte befinden. In diesem Projektionsapparat ist eine Bildroehre mit diffuser UV-Lichtstrahlung als Erstmodulator des Originalbildes verwendet, auf deren Bildschirm ein dichroitisches Filter zur Diflektierung der sichtbaren Strahlen und zum Durchlass der UV-Strahlen montiert ist. An dem dichroitischen Filter befindet sich die erwaehnte Faseroptik-Platte mit fotochromen Lichtleitern, deren Transparenz sich je nach der Helligkeit des UV-Lichtes aendert. Die fotochromen Lichtleiter sind also in bezug auf das in ihnen durchgehende sichtbare Licht, das das Originalbild formiert, ein Physikalisch aktives optisches Medium, ein praktischsekundaerer Raum-Licht-Modulator des Originalbildes. Dieser Projektionsapparat enthaelt ausserdem ein erstes optisches System zum Lenken des sichtbaren Lichtes von einer Punktlichtquelle durch die Lichtleiter der Faseroptik-Platte auf das dichrome Filter (dieses System ist durch den ersten Spiegel und die korrigierende Linse gebildet), ferner ein zweites optisches System zum Projizieren des durch das dichroitische Filter reflektierten Bildes (dieses System bildet sich durch den zweiten Spiegel, die erwaehnte Kollektivlinse und das Linsenobjektiv zur Vergroesserung des projizierten Bildes auf die Zuschauerwand).

Beim Abtasten des Leuchtstoff-Bildschirmes der Bildroehre durch den Kathodenstrahl erfolgt ein Leuchten des Luminophores mit UV-Licht, das durch das dichroitisehe Filter in die fotochromen Lichtleiter dringt, deren Transparenz mit erhoehter Helligkeit des UV-Lichtes sinkt. Dabei fallen die Lichtstrahlen von der Punktquelle des sichtbaren Lichtes, gelenkt durch den ersten Spiegel und die Kollektivlinse laengs der optischen Achsen der Lichtleiter, auf das dichroitische Filter, reflektieren sich davon laengs der optischen Achsen der Lichtleiter durch die erwaehnte korrigierende Linse und den zweiten Spiegel und gehen in die Ausblickoeffnung des Projektionsobjektivs. Durch Aenderung der Helligkeit des UV-Lichtes nach Elementen des Erstoriginalbildes aendert sich auf dem Bildschirm der Bildroehre die Transparenz der Lichtleiter, wodurch eine elementenweise Formierung des sekundaeren Originalbildes durch die Strahlen des sichtbaren Lichtes in der Flaeche der Ausgangsenden der Lichtleiter, das durch das Objektiv auf die Zuschauerbildwand projiziert wird, erfolgt.

Ein Vorteil dieses Projektionsapparates besteht in erhoehtem Kontrast und im hohen Koeffizienten der optischen Wiedergabe der projizierten Bilder. Das ist dadurch bedingt, dass sich das projizierte Originalbild durch eine gerichtete Lichtquelle formiert.

Bekannt ist jedoch, dass die fotochromen Stoffe, aus denen die Lichtleiter der Faseroptik-Platte hergestellt sind, die Formierung von Bildern mit einem engen linearen Bereich der Gradationen von Halbtoenen ergeben, was zu Halbton- und Farbverzerrungen des projizierten Bildes im Vergleich mit dem Originalbild fuehrt. Ausserdem weisen die fotochromen Stoffe eine begrenzte Zyklizitaet auf, bedingt durch ihre physikalisch-chemischen Eigenschaften; dadurch vermindert sich die Nutzungsdauer des Projektionsapparates bei dynamischer Wiedergabe von Informationen. Die Abhaengigkeit der Geschwindigkeit und der Qualitaet der dynamischen Wiedergabe der Informationen von der Staerke des modulierenden Lichtes (im gegebenen Fall von der Staerke des UV-Lichtes) beschraenkt die Haeufigkeit des Bildwechsels des Originals auf dem Display-Bildschirm im Projektionsapparat.

Die Verwendung der Lichtleiter aus fotochromen Stoffen fuehrt zu einer Beschraenkung des Anwendungsgebietes solch eines Projektionsapparates, denn seine fotochromen Lichtleiter aendern ihre Transparenz unter Einwirkung nur des UV-Lichtes; mit anderen Worten, vermag solch ein Projektionsapparat die Bilder solcher Originale zu projizieren, die das UV-Licht ausstrahlen.

Das Vorhandensein eines ersten optischen Systems mit einer aeusserlichen Punktquelle des sichtbaren Lichtes sowie die Verwendung von fotochromen Lichtleiter und dichroitischen Filtern ergeben eine Verkomplizierung der Konstruktion des Projektionsapparates.

Ausserdem fuehrt die Verwendung einer Aussenquelle des sichtbaren Lichtes zu einem erhoehten Stromverbrauch durch den Projektionsapparat.

Offenbarung der vorliegenden Erfindung

Grundlage der vorliegenden Erfindung ist die Aufgabe, einen Projektionsapparat zu entwickeln, in dem die Bauausfuehrung dar Lichtleiter der Faseroptik-Platte eine hohe Qualitaet der projizierten Farb- und Schwarz-Weiss-Originalbilder bei andauernder Nutzung des Projektionsapparates, eine Vereinfachung seiner Bauweise sowie einen verminderten Energieverbrauch gewaehrleistet.

Diese Aufgabe wird dadurch geloest, dass erfindungsgemaess in dem Projektionsapparat, der eine Faseroptik-Platte enthaelt, deren Eingangsenden der Lichtleiter mit der Ebene des Originalbildes zusammenfallen, und ein Projektionsobjektiv, in dessen Blickfeld sich die Ausgangsenden der Lichtleiter der Faseroptik-Platte befinden, auf der Verbreitungsstrecke der Lichtstrahlen in jedem der Lichtleiter der Faseroptik-Platte ein optisches System zur Konzentrierung der Lichtstrahlen zu einem Lichtbuendel und zu seiner Lenkung in die Ausblickoeffnung des Projektionsobjektivs gebildet ist.

Das besagte optische System zur Konzentrierung der Lichtstrahlen zu einem Lichtbuendel und zu seiner Lenkung in die Ausblickoeffnung des Objektivs ist ein physikalisch passives optisches Medium fuer die Lichtstrahlen und gewaehrleistet lediglich optisch-geometrische Umwandlungen des Erstoriginalbildes durch optische Elemente mit konstanten Koeffizienten der Lichtdurchlaessigkeit, Lichtbrechung und Lichtreflexion, was seinerseits unabhaengig von der Haeufigkeit und Zyklizitaet des Bildwechsels des Originalbildes die konstante Breite des Gradationsbereiches der Halbtonbilder, der Farbsaettigung und Farbreinheit in dem projezierten Bild bei andauernder Betriebszeit des Projektionsapparates sichert. Die Konzentration des vom Originalbild ausgestrahlten Lichtstroms in der Ausblickoeffnung des Projektionsobjektivs fuehrt zu einer erhoehten Helligkeit des projizierten Bildes auf der Zuschauerbildwand ohne Erhoehung des Energieverbrauchs des Projektionsapparates. Durch die optischen Systeme in den Lichtleitern der Faseroptik-Platte ergibt sich eine Vereinfachung seiner Bauart und eine Verminderung seiner Abmessungen. Solch ein Projektionsapparat vermag ausserdem, beliebige Bildarten des Originals im gesamten Bereich des optischen Spektrums, der durch die Lichtleiter der Faseroptik-Platte durchlassbar ist, zu projizieren.

Verschiedene Bauartvarianten der optischen Systeme zur Konzentrierung der Lichtstrahlen zu einem Lichtbuendel und zur Lenkung dieses Lichtbuendels in die Ausblickoeffnung des Objektivs sind denkbar. Fuer den Fall, wo die optischen Achsen der Lichtleiter parallel zur optischen Achse des Projektionsobjektivs, aber nicht durch seine Ausblickoeffnung verlaufen, ist es zeckmaessig, dass sich das optische System durch ein Fokon, eine positive Linse und ein Brechungsprisma gebildet ist, die sich in Richtung des Lichtstrahlenverlaufs in dem Lichtleiter nacheinander befinden, waehrend die gemeinsame optische Achse des Fokons und der positiven Linse mit der optischen Achse des Lichtleiters zusammenfaellt. Die Konstruktion des Brechungsprismas und seine Orientierung im einzelnen Lichtleiter in bezug auf die Ausblickoeffnung des Objektivs, die den Verlauf eines maximalen Lichtstroms durch die Ausblickoeffnung des Objektivs sichern, werden auf dem bekannten Berechungsweg nach bekannten Methoden festgelegt.

In dem Fall, wenn die optischen Achsen der Lichtleiter der Faseroptik-Platte in die Ausblickoeffnung des Objektivs gerichtet sind, ist es zweckmaessig, dass das optische System sich durch in Richtung des Lichtstrahlenverlaufs im Lichtleiter nacheinander befindlichen Fokon und positive Linse formiert, waehrend ihre gemeinsame optische Achse mit der optischen Achse des Lichtleiters zusammenfaellt und in die Ausblickoeffnung des Projektionsobjektivs gerichtet ist. In diesem Falle ist eine Ablenkung der Lichtbuendel durch die Ausrichtung der Lichtleiter in bezug auf die Ausblickoeffnung des Projektionsobjektivs gesichert.

Kurzbeschreibung der Zeichnungen

Die Vorteile der vorliegenden Erfindung werden aus den nachstehenden Beispielen fuer ihre Ausfuehrung sowie aus den Zeichnungen deutlicher.

Fig. 1. Prinzipschema des erfindungsgemaessen Projektionsapparates im Rahmen eines Fernseh-Projektionssystems.

Fig. 2. Aussenelement A in Fig. 1.

Fig. 3. Prinzipschema eines erfindungsgemaessen Projektionsapparates im Rahmen eines Fernseh-Projektionssystems (eine zweite Ausfuehrungsvariante).

Fig. 4. Aussenelement B in Fig. 3.

Ausfuehrungsvarianten der Erfindung

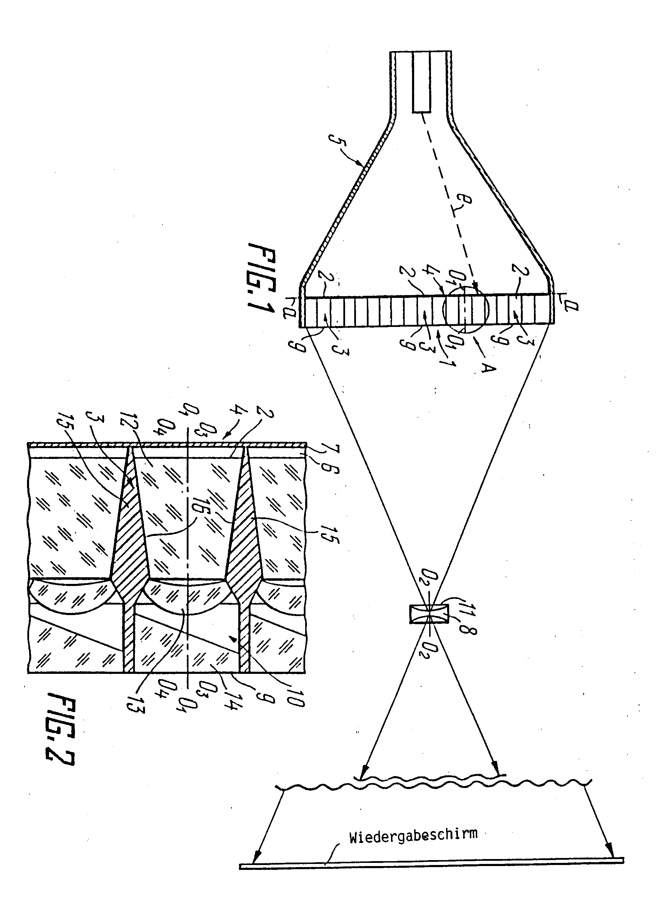

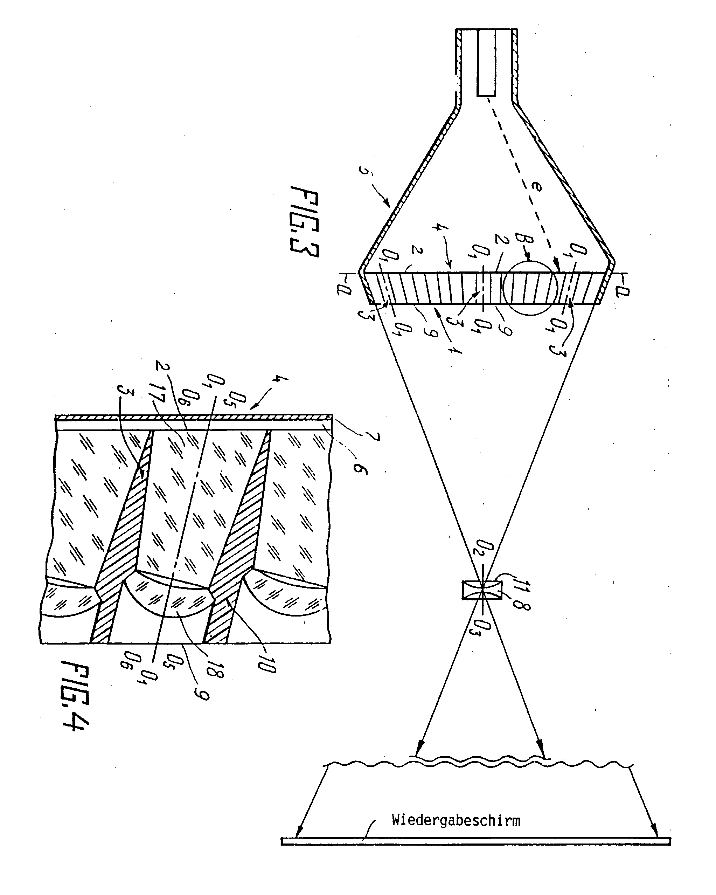

Nachstehend ist eine erste Variante des Projektionsapparates gemaess der vorliegenden Erfindung, der zum Projezieren von Originalbildern aus dem Bildschirm einer Fernsehbildroehre dient. Der Apparat enthaelt eine Faseroptik-Platte 1 (Fig.1), deren Eingangsenden 2 der Lichtleiter 3 mit der Ebene a - a des Originalbildes zusammenfallen. Mit anderen Worten, befindet sich die Faseroptik-Platte 1 mit den Eingangsenden 2 ihrer Lichtleiter 3 am Bildschirm 4 der Fernseh-Bildroehre 5. Der Bildschirm 4 der Bildroehre 5 bildet sich durch die Schicht 6 (Fig. 2) des Leuchtstoffs, die auf die Eingangsenden 2 der Lichtleiter 3 aufgetragen und mit einem lichtreflektierenden Aluminiumfilm 7 ueberzogen ist. Ferner enthaelt der Projektionsapparat ein Projektionsobjektiv 8 (Fig.1), in dessen Blickfeld sich die Ausgangsenden 9 der Lichtleiter 3 befinden. Die optischen Achsen $O_1 - O_1$ der Lichtleiter 3 sind zur optischen Achse $O_2 - O_2$ des Projektionsobjektivs 8 parallel. Auf der Verbreitungsstrecke der Lichtstrahlen (auf der Zeichnungen sind sie mit Pfeilen angegegen) ist in jedem der Lichtleiter 3 der Faseroptik-Platte 1 ein optisches System 10 (Fig.2) zur Konzentrierung der Lichtstrahlen zu einem Lichtbuendel und zu seiner Lenkung in die Ausblickoeffnung 11 (Fig.1) des Projektionsobjektivs 8 formiert. Das optische System 10 bildet sich durch ein Fokon 12 (Fig.2), eine sichelfoermige positive Linse 13 und ein Brechungsprisma 14, die sich in Richtung des Lichtstrahlenverlaufs im Lichtleiter nacheinander befinden. Dabei fallen die optischen Achsen $O_3 - O_3$, $O_4 - O_4$ des Fokons 12 und der sichelfoermigen positiven Linse 13 mit der optischen Achse $O_1 - O_1$ des Lichtleiters 3 zusammen. Jeder der Lichtleiter 3 ist in eine Huelle 15 eingeschlossen, deren Innenflaechen mit einer lichtreflektierenden Schicht 16, im gegebenen Fall mit einer Aluminiumschicht, ueberzogen sind.

Der obenbeschriebene Projektionsapparat funktioniert wie folgt:
Beim Abtasten des Bildschirmes 4 der Bildroehre 5 durch eine Kathodenstrahl erfolgt ein elementenweises Leuchten der Leuchtstoffschicht 6 mit einem diffusen Licht. Das diffuse Licht geht durch das Fokon 12, die sichelfoermige positive Linse 13 und das Brechungsprisma 14. Das Fokon 12 konzentriert das diffuse Licht an seinem Ausgangsende. Die sichelfoermige positive Linse 13 wandelt das breit ausgehendes Lichtbuendel aus dem Fokon 12 in ein eng ausgehendes Lichtbuendel um. Dadurch wird eine Konzentrierung der Lichtstrahlen in einen Lichtbuendel gewaehrleistet. Danach lenkt das Brechungsprisma 14 das Lichtbuendel in die Ausblickoeffnung 11 des Projektionsobjektivs 8 ab.

Eine weitere Variante des erfindungsgemaessen Apparates sei erlaeutert. Der Unterschied dieses Projektionsapparates von dem Apparat nach der ersten Variante besteht darin, dass die optischen Achsen $O_1 - O_1$ (Fig.3) der Lichtleiter 3 in die Ausblickoeffnung 11 des Projektionsobjektivs 8 gerichtet sind. Daraus ergibt sich eine Vereinfachung der Bauart des optischen Systems 10 (Fig.4) zur Konzentrierung der Lichtstrahlen zu einem Lichtbuendel und zur Lenkung dieses Lichtbuendels in die Ausblickoeffnung 11 des Projektionsobjektivs 8 Dieses System 10 formiert sich aus einem Fokon 17 und einer sichelfoermigen positiven Linse 18, die in Richtung des Lichtstrahlenverlaufs im Lichtleiter 3 nacheinander liegen und deren optische Achsen $O_5 - O_5$, $O_6 - O_6$ mit der optischen Achse $O_1 - O_1$ des Lichtleiters 3 zusammenfallen und in die Ausblickoeffnung 11 des Projektionsobjektivs 8 gerichtet sind.

Dieser Projektionsapparat funktioniert in aehnlicher Weise wie der Apparat nach der ersten Variante. Sein Unterschied besteht darin, dass der durch das Fokon 17 und die positive Linse 18 konzentrierte Lichtbuendel in die Ausblickoeffnung 11 des Projektionsobjektivs 8 unmittelbar gerichtet ist.

Industrielle Verwendungsmoeglichkeit

Die obenbeschriebenen erfindungsgemaessen Projektionsapparate sind im Rahmen von Fernseh-Projektionssystemen, Projektionsdisplays, Projektionsindikatoren und Epidiaskopen am effektivsten verwendbar. Sie sichern eine hohe Lichteffektivitaet (ueber 50%) bei gleichmaessiger Helligkeit auf den Raendern und in der Mitte des projizierten Bildfeldes. Darueber hinaus ermoeglicht solch ein Projektionsapparat, die Helligkeit des projizierten Bildes bei konstanter Flaeche der Ausblickoeffnung des Projektionsobjektivs dank einer erhoehten Originalbildflaeche mit hoher Lichteffektivitaet zu steigern, was gestattet, das Aufloesungsvermoegen des Projektionsapparates zu erhoehen.

**Patentansprüche**

1. Projektionsapparat, bestehend aus einer Faseroptik-Platte (1), deren Eingangsenden (2) der Lichtleiter (3) mit der Ebene (a - a) des Originalbildes zusammenfallen, und einem Projektionsobjektiv (8), in dessen Blickfeld sich die Ausgangsenden (9) der Lichtleiter (3) der Faseroptik-Platte (1) befinden, dadurch gekennzeichnet, dass auf der Verbreitungsstrekke der Lichtstrahlen in jedem der Lichtleiter (3) der Faseroptik-Platte (1) ein optischen System (10) zur Konzentrierung der Lichtstrahlen zu einem Lichtbuendel und zu seiner Lenkung in die Ausblickoeffnung (11) des Projektionsobjektivs (8) gebildet ist.

2. Projektionsapparat nach Anspruch 1, dadurch gekennzeichnet, dass das optische System aus einem Fokon (12), einer positiven Linse (13) und einem Brechungsprisma (14) besteht, die sich in Richtung des Lichtstrahlenverlaufs in dem Lichtleiter (3) nacheinander befinden, waehrend die optische Achse ($O_3 - O_3$) des Fokons (12) und die optische Achse ($O_4 - O_4$) der positiven Linse (13) mit der optischen Achse ($O_1 - O_1$) des Lichtleiters (3) zusammenfal-

len.

3. Projektionsapparat nach Anspruch 1, dadurch gekennzeichnet, dass das optische System (10) aus einem Fokon (17) und einer positiven Linse (18) besteht, die sich in Richtung des Lichtstrahlen verlaufs in dem Lichtleiter (3) nacheinander befinden, waehrend die optische Achse ($O_5$ -$O_5$) des Fokons (17) und die optische Achse ($O_6$ - $O_6$) der positiven Linse (18) mit der optischen Achse ($O_1$ - $O_1$) der Lichtleiters (3) zusammenfallen und in die Ausblickoeffnung des Projektionsobjektivs (8) gerichtet sind.

EP 0 491 963 A1

FIG.1

FIG.2

Wiedergabeschirm

8

FIG.3

FIG.4

Wiedergabeschirm

# INTERNATIONAL SEARCH REPORT

**I. CLASSIFICATION OF SUBJECT MATTER** (if several classification symbols apply, indicate all) *

According to International Patent Classification (IPC) or to both National Classification and IPC

Int.Cl.$^5$: G 03 B 21/00

**II. FIELDS SEARCHED**

| Minimum Documentation Searched 7 | |
|---|---|
| Classification System | Classification Symbols |
| Int.Cl.$^5$: | G 03 B 21/00, G 02 B 6/08, 6/26, 6/32 |

Documentation Searched other than Minimum Documentation
to the Extent that such Documents are Included in the Fields Searched *

**III. DOCUMENTS CONSIDERED TO BE RELEVANT** *

| Category * | Citation of Document, 11 with indication, where appropriate, of the relevant passages 12 | Relevant to Claim No. 13 |
|---|---|---|
| A | US, A, 3951533 (XEROX CORPORATION), 20 April 1976, the claims | 1 |
| A | US, A, 4601537 (SEAN M. SACCOCIO), 22 July 1986, the claims | 1 |
| A | US, A, 4807954 (NIPPON HOSO KYOKAI), 28 February 1989, the claims, fig. 8 | 1,3 |
| A | US, A, 4904049 (HUGHES AIRCRAFT COMPANY), 27 February 1990, the claims, fig. 3 | 1,3 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 1 October 1991 (01.10.91) | 18 October 1991 (18.10.91) |
| International Searching Authority | Signature of Authorized Officer |
| ISA/SU | |

Form PCT/ISA/210 (second sheet) (January 1985)